(19) Europäisches Patentamt
European Patent Office
Office européen des brevets

(11) Veröffentlichungsnummer: **0 000 706**
**B1**

(12) **EUROPÄISCHE PATENTSCHRIFT**

(45) Veröffentlichungstag der Patentschrift: **01.04.81**

(21) Anmeldenummer: **78100381.9**

(22) Anmeldetag: **12.07.78**

(51) Int. Cl.³: **D 21 H 3/40,**
C 08 F 222/06, C 08 F 8/32
//(C08F222/06, 210/14)

# (54) Verwendung von Polyimidaminsalzen als kationisches Oberflächenleimungsmittel für Papier.

(30) Priorität: **21.07.77 DE 2732851**

(43) Veröffentlichungstag der Anmeldung:
**21.02.79 Patentblatt 79/4**

(45) Bekanntmachung des Hinweises auf die Patenterteilung:
**01.04.81 Patentblatt 81/13**

(84) Benannte Vertragsstaaten:
**BE CH DE FR GB NL SE**

(56) Entgegenhaltungen:
**DE - A - 1 621 693**
**DE - A - 2 544 948**

(73) Patentinhaber: **BAYER AG**
***Zentralbereich Patente, Marken und Lizenzen***
**D-5090 Leverkusen 1, Bayerwerk (DE)**

(72) Erfinder: **Kolb, Günter, Dr.**
**Heinrich-von-Kleist-Strasse 7**
**D-5090 Leverkusen 1 (DE)**
Erfinder: **Müller, Friedhelm, Dr.**
**Zum Hahnenberg 62**
**D-5068 Odenthal (DE)**
Erfinder: **Probst, Joachim, Dr.**
**Wolfskaul 1**
**D-5000 Köln 80 (DE)**
Erfinder: **Sackmann, Günter, Dr.**
**Steinstrasse 24**
**D-5090 Leverkusen 3 (DE)**
Erfinder: **von Bonin, Wulf, Dr.**
**Mendselssohnstrasse 30**
**D-5090 Leverkusen 1 (DE)**

**EP 0 000 706 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verwendung von Polyimidaminsalzen als kationisches Oberflächenleimungsmittel für Papier

Die vorliegende Erfindung betrifft die Verwendung von Salzen von Polyimidaminen mit organischen oder anorganischen Säuren zur Oberflächenleimung von Papier. Die entsprechenden Polyimidamine leiten sich von Copolymerisaten aus Maleinsäureanhydrid und 2,4,4-Trimethylpenten-1 ab.

Aus der DOS 1 570 914 (=belgische Patentschrift 654 889) ist es bekannt, Maleinsäureanhydridcopolymere mit ungesättigten Monomeren, wie z.B. Styrol, Vinyl und Allyläthern etc. sowie mit unverzweigten $\alpha$-Olefinen als Comonomeren, mit einem Diamin und gegebenenfalls einem Monoamin umzusetzten. Das betreffende Diamin trägt sowohl eine primäre als auch tertiäre Aminogruppe. Die Umsetzung geschieht in inerten organischen Lösungsmitteln. Die erhaltenen Polyimidamine werden mit Epihalogenhydrinen, z.B. Epichlorhydrin, quaterniert. Diese quaternierten Produkte werden in wäßriger Lösung als Oberflächenleimungsmittel für Papier verwendet. Die Molekulargewichte der Polymeren liegen zwischen 2000 und 5000. Bei höheren Molekulargewichten wird Gelbbildung beobachtet, bei sehr niedermolekularen Produkten (MG <2000) ist die Leimungswirkung ungenügend.

Aus der deutschen Patentschrift 1 595 704 ist es bekannt, Maleinsäureanhydridhomo- oder -copolymerisate mit einem Gemisch aus Diaminen mit einer primären und einer tertiären Aminogruppe und primären Monoaminen umzusetzen. Hierbei entfällt auf eine Anhydridgruppe etwa eine primäre Aminogruppe. Die Umsetzung wird in wäßrigen oder alkoholisch-wäßrigen Säuren bei erhöhten Temperaturen durchgeführt. Hierbei werden, bezogen auf tertiäre Aminogruppen im Amingemisch, 25 bis 350 Molprozent an Säureäquivalenten verwendet. Die so dargestellten Polyimidamine eignen sich in neutraler Form als Emulgier- und Dispergiermittel zur Herstellung von Beschichtungen und Schutzüberzügen. Weiterhin eignen sie sich als Hydrophobierungsmittel und Zwischenprodukte für Pflanzenschutzmittel und Pharmazeutika.

Zur Herstellung von Papierleimungsmitteln müssen derartige Polyimidamine entweder gemäß deutschem Patent 1 621 688 mit nichtkationischen Polymeren abgemischt werden oder gemäß deutschem Patent 1 621 689 mit speziellen, olefinisch ungesättigten Pfropfmonomeren in Pfropfpolymerisate umgewandelt werden. Wie aus den Vergleichsversuchen des deutschen Patents 1 621 688 hervorgeht, besitzen die Polyimidamine allein eine deutlich geringere, unzureichende Leimungswirkung.

Aus der DE—OS 25 44 948 sind kationische Leimungsmittel auf der Basis von Copolymerisaten aus Maleinsäureanhydrid und alpha-Olefinen mit 10—26 Kohlenstoffatomen bekannt, die durch Überführung der Copolymerisate in Polyimidamine und anschließende Salzbildung erhalten werden. Zur Herstellung geeigneter Polyimidamine müssen die Copolymerisate außer mit monoprimärenmonotertiären aliphatischen Diaminen zusätzlich auch mit einem niedermolekularen Polyamin umgesetzt werden.

Überraschenderweise wurde nun gefunden, daß Polyimidamine der genannten Art, dis sich von Copolymerisaten aus Maleinsäureanhydrid und 2,4,4-Trimethylpenten-1 durch Umsetzung mit einem Gemisch aus einem Diamin mit tertiärer und primärer Aminogruppe und einem primären Monoamin ableiten, direkt in Form einer wäßrigen Lösung ihrer Salze mit organischen oder anorganischen Säuren als ausgezeichnet wirksame Oberflächenleimungsmittel für Papier eingesetzt werden können.

Gegenstand der Erfindung ist somit die Verwendung von Salzen von organischen oder anorganischen Säuren mit Polyimidaminen aus Copolymerisaten von Maleinsäureanhydrid mit Kohlenwasserstoffmonomeren und einem Gemische aus

A) einem Diamin mit tertiärer und primärer Aminogruppe und

B) Ammoniak oder einem primären Monoamin

als Oberflächenleimungsmittel für Papier, dadurch gekennzeichnet, daß sie sich von Copolymerisaten aus Maleinsäureanhydrid und 2,2,4-Trimethylpenten-1 mit mitteleren Molgewichten von 8000 bis 500 000 ableiten und aus diesen durch Umsetzung in wasserfreiem organischem Medium bei Temperaturen von 0°C bis 200°C mit dem Amingemisch erhalten werden, wobei das Molverhältnis von Diamin A) zu Ammoniak bzw. Monoamin B) 1:0,3 bis 1:2,0 beträgt und mindestens 80% der Anhydridgruppen in die entsprechenden Imidgruppen überführt worden sind.

Die Copolymeren des Maleinsäureanhydrids mit 2,4,4-Trimethylpenten-1 sind bevorzugt äquimolar und alternierend aufgebaut. Die mittleren Molekulargewichte liegen zwischen 8000 und 500 000, vorzugsweise zwischen 10 000 und 60 000, bestimmt durch Membranosmometrie. Die bevorzugten Copolymeren besitzen Grenzviskositäten von 0,08 bis 0,3 dl/g, gemessen in N,N-Dimethylformamid bei 25°C.

Copolymere mit Grenzviskositäten unter 0,08 dl/g führen zu wesentlich weniger wirksamen Leimungsmitteln für Papier. Zu hochmolekulare Produkte ergeben zu hohe Viskositäten des Leimungsmittels und damit eine schlechtere Verarbeitbarkeit.

Zur Darstellung der Polyimidamine werden die Copolymeren aus Maleinsäureanhydrid und 2,4,4-Trimethylpenten-1 in wasserfreiem organischem Medium mit einem Gemisch aus

A) einem Diamin mit primärer und tertiärer Aminogruppe und

B) Ammoniak oder einem primären Monoamin

bei Temperaturen von 0° bis 200°C umgesetzt und dabei die Anhydridgruppen der Copolymeren mindestens zu 80%, bevorzugt zu mehr als 85%, in die entsprechenden Imidgruppen überführt.

Das Molverhältnis von Diamin (A) zu Monoamin (B) beträgt dabei 1:0,3 bis 1:2,0. Als Diamine werden solche der allgemeinen Formel

(A)

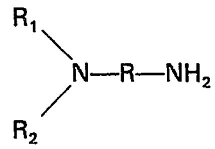

und als Monoamine solche der allgemeinen Formel

(B) $R_3—NH_2$

eingesetzt.

In den obigen Formeln bedeutet R eine 2 bis 12, vorzugsweise 2 bis 6 Kohlenstoffatome, enthaltende lineare oder verzweigte aliphatische Kette, die gegebenenfalls noch Sauerstoff- oder Schwefelatome enthalten kann. Die Substituenten $R_1$ und $R_2$ der tertiären Aminogruppe können gleich oder verschieden sein und stellen aromatische Reste, wie Phenyl, Toluyl, Xylyl, Chlorphenyl, Nitrophenyl, 4-Dimethylaminophenyl, vorzugsweise Phenyl, Toluyl, Xylyl, araliphatische Reste, wie Benzyl, 2-Phenyläthyl, vorzugsweise Benzyl; Alkylreste mit 1 bis 12, vorzugsweise 1 bis 6 Kohlenstoffatomen, bzw. die beiden Substituenten zusammen einen 5- oder 6-gliedrigen, gegebenenfalls ein Sauerstoff- oder Schwefelatom enthaltenden cyclischen Ring dar.

Bevorzugt sind Diamine, derem primäre und tertiäre Aminogruppe durch eine lineare Alkylenkette aus 2 bis 6 Methylengruppen voneinander getrennt sind und deren tertiäre Aminogruppe durch lineare $C_1—C_4$-Alkylreste substituiert ist. Besonders bevorzugt ist 1-Amino-3-dimethylaminopropan.

Der Substituent $R_3$ stellt einen aliphatischen oder cycloaliphatischen, gesättigten oder ungesättigten, gegebenenfalls substituierten Kohlenwasserstoffrest dar.

Bevorzugte Monoamine sind Ammoniak und/oder aliphatische primäre Monoamine mit 1 bis 18 Kohlenstoffatomen oder cycloaliphatische Monoamine mit 5 bis 8 Kohlenstoffatomen. Besonders bevorzugte Monoamine sind beispielsweise Methylamin, Äthylamin, n-Propylamin, n-Butylamin, sek. Butylamin, iso-Butylamin, tert. Butylamin, n-Hexylamin, 2-Äthylhexylamin, Cyclohexylamin und Dehydroabietylamin.

Als Amingemisch wird besonders bevorzugt 1-Amino-3-dimethylaminopropan und Äthylamin im Molverhältnis 1:1 bis 1:1,6 eingesetzt.

Das Gemisch aus den Diaminen (A) und den Monoaminen (B) wird in annähernd äquimolarer Menge, bevorzugt jedoch in geringem Überschuß bezogen auf die Anhydridgruppen des Ausgangspolymeren eingesetzt; bevorzugt soll das zum Einsatz gelangende Amingemisch 1,0—1,5 Mol primäre Aminogruppen, bezogen auf ein Mol Anhydridgruppen des Polymeren, enthalten. Der Aminüberschuß wird deshalb zugegeben, um eine möglichst vollständige Imidisierung zu erreichen, die mindestens 80%, bevorzugt mehr als 85%, betragen soll. Niedriger imidisierte Umsetzungsprodukte sind schlecht wasserlöslich und zeigen ungenügende Leimungswirkung auf Papier. In dem Gemisch von Diamin (A) und primärem Amin (B) soll das Molverhältnis von Diamin zu Monoamin zwischen 1:0,3 und 1:2,0 liegen. Die beiden Aminkomponenten können als Gemisch oder nacheinander zur Reaktion gebracht werden. Als Lösungsmittel eignen sich u.a. organische, alkyl- und halogensubstituierte aromatische Lösungsmittel wie Benzol, Toluol, m-, o- oder p-Xylol oder deren Gemische. Sie vermögen sowohl die Maleinsäureanhydrid-2,4,4-Trimethylpenten-1-copolymeren als auch deren Umsetzungsprodukte, die Polyimidamine, zu lösen.

Zur Herstellung der Leimungsmittel und um die Polyimidamine in wäßrigen Systemen zu lösen, müssen diese un Salzform überführt werden. Hierzu eignen sich anorganische und organische Säuren, von denen 100 bis 500 Molprozent, bezogen auf die im chemisch gebundenen Amingemisch enthaltenden tertiären Aminogruppen, zugegeben werden. Als Säuren eignen sich insbesondere Ameisensäure, Essigsäure, Propionsäure, Milchsäure, Salzsäure, Salpetersäure und Schwefelsäure, vorzugsweise Ameisensäure und Essigsäure. Als Lösungsmittel dient im allgemeinen Wasser. Nach beendeter Reaktion liegen die Polyimidaminsalze in 5 bis 30 %iger Lösung vor. Man beobachtet dabei keine Vergelung der Produkte, wie sie in der belgischen Patentschrift 654 889 im höheren Molekulargewichtsbereich über 5000 beschrieben wird.

Die Imidisierung des Copolymeren aus Maleinsäureanhydrid und 2,4,4-Trimethylpenten-1 erfolgt zweckmäßigerweise in 2 Stufen. In der ersten Stufe wird das Copolymere im organischen Lösungsmittel bei Temperaturen zwischen 0°C und 50°C suspendiert bzw. gelöst und das Amingemisch unter Rühren bei diesen Temperaturen zugetropft. In dieser Reaktionsstufe erfolgt überwiegend die Bildung von Monoamid. In der zweiten Reaktionsstufe wird das Reaktionsgemisch unter Rühren auf eine Temperatur von 130°C bis 200°C gebracht. In dieser Stufe erfolgt thermisch, gegebenenfalls mit Hilfe von Katalysaroren, wie z.B. p-Toluolsulfonsäure, Pyridin etc., unter Wasserabspaltung die Imidbildung aus mindestens 80%, vorzugsweise mehr als 85% der ursprünglichen Anhydridgruppe.

Die Überführung der organischen Polymerisatlösung in eine wäßrige Lösung kann beispielsweise

so erfolgen, daß man die organische Lösung unter gleichzeitigem Abdestillieren des organischen Lösungmittels kontinuierlich in eine geheizte Vorlage mit verdünnter wäßriger Säure gibt.

Im Unterschied zur deutschen Patentschrift 1 595 704 verwendet man die zu Polyimidaminsalzen umgesetzten Copolymeren aus Maleinsäureanhydrid und 2,4,4-Trimethylpenten-1 als Oberflächenleimungsmittel für Papier, die direkt in wäßriger Lösung ohne jegliche Zusätze ausgezeichnete Leimungswirkung besitzen. Dabei sind Leimungsmittel im Gegensatz zu Hydrophobierungsmitteln, die wasserabstoßend wirken, solche Produkte, die die Beschriftung von Papier mit Tinte gewährleisten, jedoch deren Verlaufen verhindern. Während also Hydrophobierungsmittel wasserabweisend und wasserunlöslich sind, sind die erfindungsgemäßen Leimungsmittel wasserlöslich.

Außerdem wurde gefunden, daß das in den deutschen Patentschriften 1 595 704 und 1 621 688 beschriebene Herstellungsverfahren für Polymimidamine für die erfindungsgemäß zu verwendenden Leimungsmittel nicht geeignet ist, da nach diesem Verfahren Produkte erhalten werden, die bei weitem nicht den gewünschten hohen Imidisierungsgrad von mindestens 80% erreichen. Demgemäß können Salze dieser Produkte mit Säuren auch nicht als Oberflächenleimungsmittel für Papier eingesetzt werden.

Ein Fortschritt gegenüber der deutschen Patentschrift 1 162 688, in der kationische Leimungsmittel in Form von Dispersion angewendet werden, ist die erfindungsgemäße Verwendung der Leimungsmittel in homogener wäßriger Lösung. Sie sind problemlos zu verarbeiten, garantieren im Gegensatz zu heterogenen Leimungssystemen absolute Homogenität des geleimten Papiers und zeigen auf alle Papieren hervorragende Leimungswirkung, wobei besonders die Leimung kreidehaltigen Papiers hervorzuheben ist. Die erfindungsgemäß verwendeten Leimungsmittel sind hierbei allen herkömmlichen Leimungsmitteln eindeutig überegen.

In den folgenden Beispielen sind die angegebenen Teile Gewichtsteile, sofern nicht anders vermerkt.

### Beispiel A

In einem Dreihalskolben mit Wasserabscheider werden 105 Teile alternierendes Copolymerisat aus Maleinsäureanhydrid und 2,4,4-Trimethylpenten-1 (mittleres Molekulargewicht $M_{GPC}$[1]: 47 000) in 260 Teilen Xylol eingetragen. Es wird unter Rühren bei 120°C gelöst und nacheinander 26 Teile Dehydroabietylamin, in 174 Teilen Xylol gelöst, und 63 Teile 1-Amino-3-dimethylaminopropan zugetropft. Danach läßt man 10 Stunden lang am Wasserabscheider bei 150—160°C reagieren. Die bei der azeotropen Destillation mit Xylol abgeschiedene Wassermenge wird als ungefähres Umsatzmaß betrachtet (8,5 ml = 94% Umsatz). Nach Beendigung der Polyimidbildung werden 50 Teile Ameisensäure zugetropft. Von dem ausfallenden Polyimidaminsalz wird der größte Teil des Xylols abdekantiert und das restliche Lösungsmittel mit Wasserdampf azeotrop abdestilliert. Gleichzeitig erhält man eine wäßrige Lösung mit einem Festgehalt von 9,1 Gewichtsprozent.

### Beispiel B

105 Teile Copolymerisat aus Maleinsäureanhydrid und 2,4,4-Trimethylpenten-1 ($M_{GPC} = 47000$) werden bei 120°C in 260 Teilen Xylol gelöst. Eine Mischung von 45 Teilen Stearylamin und 34 Teilen 1-Amino-3-dimethylaminopropan, in 174 Teilen Xylol gelöst, werden zu der Polymerlösung unter Rühren zugetropft. Bei der stark exothermen Reaktion erhält man zunächst ein xylolunlösliches Produkt, wahrscheinlich das Monoamid, das bei 10-stündigem Rühren am Wasserabscheider bei 150—160°C unter Wasserabspaltung in das lösliche Polyimidamin übergeht. Die ist sehr leicht zu erkennen an der für cyclische Fünfring-Imide charakteristischen IR-Doppelbande bei den Wellenzahlen 1690 $cm^{-1}$ und 1770 $cm^{-1}$, während die für cyclische Fünfring-Anhydride charakteristische Teilbande bei 1840 $cm^{-1}$ verschwindet. 34,5 Teile Ameisensäure werden zugetropft. Mit Wasserdampf von 100°C wird das organische Lösungsmittel abdestilliert. Die wäßrige Lösung hat einen Festgehalt von 14,9 Gew.-%.

### Beispiel C

Wie Beispiel B, nur wird an Stelle des dortigen Amingemischs ein Gemisch aus 46 Teilen Dodecylamin und 26 Teilen 1-Amino-3-dimethylaminopropan, in 174 Teilen Xylol gelöst, eingetropft. Die wäßrige Lösung hat einen Festgehalt von 10,5 Gew.%.

### Beispiel D

Wie Beispiel B, nur wird an Stelle des dortigen Amingemischs ein Gemisch aus 15 Teilen Hexylamin und 39 Teilen 1-Amino-3-dimethylaminopropan ohne Lösungsmittel zugetropft. Die wäßrige Lösung hat einen Festgehalt von 13,5 Gew.%.

### Beispiel E

105 Teile Copolymerisat aus Maleinsäureanhydrid und 2,4,4-Trimethylpenten-1 werden bei 120°C in 435 Teilen Xylol gelöst und ein Gemisch von 22 Teilen Cyclohexylamin und 28 Teilen 1-

---

[1] $M_{GPC}$ = Molgewicht durch Gelpermeationschromatographie bestimmt

Amino-3-dimethylaminopropan zugetropft. Am Wasserabscheider werden 8,3 Teile Wasser abgeschieden (= Umsatz von 92%). Dadurch werden 35 Teile Ameisensäure zugegeben und eine Wasserdampfdestillation bei 100°C durchgeführt. Die wäßrige Lösung hat einen Festgehalt von 7,9%.

Beispiel F

525 Teile Copolymerisat wie in Beispiel A, 200 Teile Xylol, 91 Teile n-Butylamin und 128 Teile 1-Amino-3-dimethylaminopropan werden in einem Rührautoklaven aus Edelstahl eingetragen. Unter Rühren wird auf 50°C geheizt, 2 Stunden bei dieser Temperatur gehalten und 3 Stunden bei 130°C gerührt. Am Wasserabscheider erhält man 42,5 Teile Wasser (= 94% Umsatz). Zur Lösung werden 250 Teile Ameisensäure zugetropft und mit Wasserdampf das Xylol azeotrop abdestilliert. Die wäßrige Lösung hat einen Festgehalt von 11,4%.

Beispiel G

525 Teile Copolymerisat wie in Beispiel A, in 525 Teile Toluol gelöst, werden zusammen mit 1650 Teilen Xylol und 85 Teilen 1-Amino-3-dimethylaminopropan und 98 Teilen n-Propylamin in Rührautoklaven vorgelegt. 3 Stunden wird bei 50°C und 7 Stunden lang bei 130°C gerührt. Am Wasserabscheider werden 40 Teile Wasser abgeschieden (= 89% Umsatz). 173 Teile Ameisensäure werden zu der Lösung des Polyimidamins zugetropft und anschließend wieder eine Wasserdampfdestillation durchgeführt. Der Festgehalt der wäßrigen Lösung ist 6,5%.

Beispiel H

Wie Beispiel 6, jedoch statt n-Propylamin und 1-Amino-3-dimethylaminopropan ein Gemisch aus 126 Teilen Äthylamin und 112 Teilen 1-Amino-3-dimethylaminopropan. Der Festgehalt der wäßrigen Lösung beträgt 9,6%.

Beispiel I

814 Teile Copolymerisat wie in Beispiel A werden zusammen mit 3100 Teilen Xylol, 181 Teilen 1-Amino-3-dimethylaminopropan und 112 Teilen Äthylamin in Rührautoklaven vorgelegt. Dann wird 3 Stunden bei 50°C und 7 Stunden bei 130°C gerührt. Am Wasserabscheider werden 65 Teile Wasser abgeschieden (= 93% Umsatz).

380 Teile Ameisensäure werden zu der Lösung des Polyimidamins zugetropft. Daran anschließend folgt eine Wasserdampfdestillation. Der Festgehalt der wäßrigen Lösung ist 10,8%. Die Viskosität der Lösung bei 25°C ist ca. 30 cP, gemessen in einem Haake-Viscotester.

Im folgenden ist die Verwendung der Leimungsmittel A—H beispielhaft beschrieben:

Als Leimungsflotte für die Oberflächenleimung wurde eine Lösung von 5 Gew.-% Stärke (Perfectamyl® A 4692 der Firma AVEBE) und 0,25 bzw. in einigen Fällen 0,5 Gew.-% des zu prüfenden Leimungsmittels (berechnet als Wirksubstanz) in 94,75 bzw. 94,5 Gew.-% Wasser verwendet.

Für die Leimung wurde eine Laborleimpresse der Firma Werner Mathis, Zürich, Type HF eingesetzt. Die Leimungsflotte hatte in der Leimpresse eine Temperatur von ca. 20°C. Das Papier wurde mit einer Geschwindigkeit von 4 m/Min. durchgezogen.

Die Trocknung der oberflächengeleimten Papiere erfolgte auf einem Trockenzylinder innerhalb 45 sec. bei ca. 100°C. Vor der Leimungsprüfung wurden die Papiere 2 Stunden bei Raumtemperatur klimatisiert. Abschnitte der Papiere wurden dann vorgewogen, 1 Min. in Wasser von 20°C getaucht, zwischen Filterpapier mittels eines 10 kg Rollgewichtes einmal abgepresst und zurückgewogen. Aus der Gewichtsdifferenz wurde der Wert für die *beidseitige* Wasseraufnahme in $g/m^2$ errechnet. Je geringer die Wasseraufnahme, desto besser ist die Wirkung des geprüften Leimungsmittels. Eine gute Leimung liegt vor, wenn eine Wasseraufnahme von ca. 40 $g/m^2$ und niedriger erreicht wird.

Beispiel 1:

Dieses Beispiel soll zeigen, daß mit den beschriebenen Leimungsmitteln auf ungeleimten Papieren aus gebleichten Zellstoffen gute Leimungseffekte zu erzielen sind.

Das verwendete Rohpapier war aus gebleichtem Sulfitzellstoff unter Zusatz von 3% China Clay (gerechnet als Asche) bei pH 6,8 hergestellt worden und hatte ein Flächengewicht von 70 $g/m^2$.

Tabelle 1:
Oberflächenleimung auf ungeleimten Papier aus gebleichtem Zellstoff.

| Leimungsmittel: | Wasseraufnahme in g/m² bei Zusatz von 0,25 Gew.-% | 0,5 Gew.-% |
| --- | --- | --- |
| | Leimungsmittel (bezogen auf reine Wirksubstanz) zur Flotte: | |
| A | 38,0 | |
| B | 56,8 | 38,1 |
| C | 57,7 | 40,0 |
| D | 43,9 | |
| E | 44,2 | |
| F | 39,9 | |
| G | 37,9 | |
| H | 35,3 | |

Ohne Leimungsmittel beträgt die Wasseraufnahme 87 g/m².

Beispiel 2:

Dieses Beispiel zeigt die gute Wirksamkeit der beschriebenen Leimungsmittel auf Holzschliffhaltigen Papieren.

Das verwendete Rohpapier war aus 50% gebleichtem Holzschliff und 50% gebleichtem Sulfitzellstoff unter Zusatz von 11% China Clay (gerechnet als Asche) bei pH 5 hergestellt worden und hatte ein Flächengewicht von 70 g/m².

Tabelle 2:
Oberflächenleimung auf ungeleimtem, holzschliffhaltigem Papier.

| Leimungsmittel: | Wasseraufnahme in g/m² bei Zusatz von 0,25 Gew.-% | 0,5Gew.-% |
| --- | --- | --- |
| | Leimungsmittel (bezogen auf reine Wirksubstanz) zur Flotte: | |
| A | 39,0 | |
| B | 68,4 | 37,6 |
| C | 55,1 | 34,8 |
| D | 33,3 | |
| E | 34,5 | |
| F | 31,0 | |
| G | 31,2 | |
| H | 31,0 | |

Ohne Leimungsmittel beträgt die Wasseraufnahme 92,7 g/m².

Beispiel 3:

Dieses Beispiel demonstriert den guten Effekt der beschriebenen Leimungsmittel auf Calciumcarbonat-haltigen Papieren.

Das verwendete Rohpapier war aus 50% gebleichtem Fichtensulfit und 50% gebleichtem Buchensulfat-Zellstoff unter Zusatz von 14% gefälltem Calciumcarbonat (gerechnet als Asche) bei pH 6,8 hergestellt und hatte ein Flächengewicht von 70 $g/m^2$.

Tabelle 3:
Oberflächenleimung auf ungeleimtem, Calciumcarbonat-haltigem Papier.

| Leimungsmittel: | Wasseraufnahme in $g/m^2$ bei Zusatz von | |
|---|---|---|
| | 0,25 Gew.-% | 0,5 Gew.-% |
| | Leimungsmittel (bezogen auf reine Wirksubstanz) zur Flotte: | |
| A | 37,0 | |
| B | 53,4 | 31,8 |
| C | 54,5 | 44,5 |
| D | 32,8 | |
| E | 35,7 | |
| F | 32,6 | |
| G | 33,5 | |
| H | 34,6 | |

Ohne Leimungsmittel beträgt die Wasseraufnahme 77,6 $g/m^2$.

Beispiel 4

In diesem Beispiel wird eines der beschriebenen Produkte Leimungsmittel I, mit einem kationischen "Leimungsmittel M" verglichen, welches den bisherigen Stand der Technik darstellt und in seiner Zusammensetzung den in der DT—OS 1 621 688 beschriebenen Produkten entspricht, und zwar dem dortigen Leimungsmittel 2, einem Gemisch aus

A) 30 Teilen einer 0,25%igen wäßrigen Lösung des ameisensauren Salzes eines Umsetzungsproduktes aus 1 Mol eines alternierenden Styrol-Maleinsäureanhydrid-Copolymerisats mit 0,5 Mol 1-Dimethylaminopropylamin- und 0,5 Mol Cyclohexylamin und

B) 70 Teilen einer 0,25%igen Emulsion eines Copolymerisates aus 60 Gew.-% Butylacrylat und 40 Gew.-% Styrol.

Folgende Rohpapiere wurden verwendet:

| | |
|---|---|
| Rohpapier I: | Wie in Beispiel 1 beschrieben |
| Rohpapier II: | Wie in Beispiel 3 beschrieben |
| Rohpapier III: | Gebleichter Zellstoff, ca. 12 Talkum-Asche, 1% Aluminiumsulfat, ungeleimt; ca. 80 $g/m^2$. |
| Rohpapier IV: | Gebleichter Zellstoff, ca. 7% China Clay-Asche, vorgleimt mit 0,1% Harzleim und 0,5% Aluminiumsulfat: ca. 75 $g/m^2$. |

Der Leimungsgrad gegen Tinte wurde mit dem Hercules Sizing Tester bestimmt, entsprechend der Bedienungsanleitung der Herstellerfirma Hercules Inc., Wilmington, Delaware, USA. Gemessen wird die Zeit in Sekunden, die bis zum Remissionsabfall auf 75% des Remissionswertes von Papier vergeht, wenn die Prüftinte auf das Papier aufgebracht wird und durch das Papier durchschlägt. Je länger die gemessene Zeit, umso besser ist der Leimungsgrad.

Tabelle 4:

Vergleich eines der beschriebenen Produkte, Leimungsmittel I, mit einem marktüblichen Leimungsmittel M auf verschiedenen Papieren.

| Papier: | Leimungsmittel: | Leimungsgrad bei Zusatz von 0,125 | 0,175 | 0,25 Gew.-% Wirksubstanz zur Flotte: | |
|---|---|---|---|---|---|
| I | Vergleich M | 79 | 177 | 352 | sec. |
| | Leimungsmittel I | 144 | 344 | 401 | sec. |
| II | Vergleich M | 19 | 69 | 152 | sec. |
| | Leimungsmittel I | 77 | 231 | 298 | sec. |
| III | Vergleich M | 129 | 424 | 532 | sec. |
| | Leimungsmittel I | 245 | 619 | 816 | sec. |
| IV | Vergleich M | 42 | 130 | 304 | sec. |
| | Leimungsmittel I | 194 | 237 | 414 | sec. |

Es zeigt sich hierbei ganz deutlich, daß bei allen geprüften ungeleimten und vorgeleimten Papiersorten der Leimungseffekt des Leimungsmittels I den des handelsüblichen Leimungsmittels M bei den drei gewählten praxisnahen Konzentrationen erheblich übertrifft.

Beispiel 5

Dieses Beispiel zeigt die Verwendbarkeit der beschriebenen Leimungsmittel in der Papiermasse.

In einem Papierstoff aus 50% Birkensulfat-, 30% Kiefersulfat- und 20% Fichtensulfit-Zellstoff wurden bei einer Stoffdichte von 0,5% und einem pH-Wert von 6,9 unter Rühren 1% bzw. 2% Leimungsmittel (Wirksubstanz, bezogen auf trockenen Zellstoff) zugesetzt.

Sofort anschließend wurden auf einem Laborblattbildner Papierblätter gebildet, die bei 100°C getrocknet wurden und ein Flächengewicht von ca. 100 g/m² hatten.

Die Leimungswirkung wurde durch die in der Papierindustrie übliche "Tintenschwimmprobe" bestimmt, d.h. durch Auflegen der Papiere auf Prüftinte (Pelikan 4001).

Zum Vergleich wurde wiederum ein kationisches "Leimungsmittel M" herangezogen, welches den in der DT—PS 1 621 688 beschriebenen Produkten entspricht, und zwar dem dortigen Leimungsmittel 2, einem Gemisch aus

A) 30 Teilen einer 0,25%igen wäßrigen Lösung des ameisensauren Salzes eines Umsetzungsproduktes aus 1 Mol eines alternierenden Styrol-Maleinsäureanhydrid-Copolymerisats mit 0,5 Mol 1-Dimethylaminopropylamin-3 und 0,5 Mol Cyclohexylamin und

B) 70 Teilen einer 0,25%igen Emulsion eines Copolymerisates aus 60 Gew.-% Butylacrylat und 40 Gew.-% Styrol."

Tabelle 5:
Vergleich der beschriebenen Leimungsmittel mit einem marktüblichen Leimungsmittel M beim Einsatz in der Papiermasse.

| Leimungsmittel: | Tintenschwimmprobe: Kein Tinten-Durchschlag bei Masseleimung mit | |
|---|---|---|
| | 1 Gew.-% | 2 Gew.-% |
| | nach | |
| Leimungsmittel M | 10 min | 20 min. |
| Leimungsmittel A | 10 min. | 20 min. |
| Leimungsmittel B | 10 min. | 20 min. |
| Leimungsmittel C | 1 min. | 2 min. |
| Leimungsmittel D | 5 min. | 20 min. |
| Leimungsmittel E | 10 min. | 20 min. |
| Leimungsmittel G | 10 min. | 20 min. |
| Leimungsmittel H | 10 min. | 20 min. |

**Patentansprüche**

1. Verwendung von Salzen von organischen oder anorganischen Säuren mit Polyimidaminen aus Copolymerisaten von Maleinsäureanhydrid mit Kohlenwasserstoffmonomeren und einem Gemisch aus
A) einem Diamin mit tertiärer und primärer Aminogruppe
und
B) Ammoniak oder einem primären Monoamin
als Oberflächenleimungsmittel für Papier, dadurch gekennzeichnet, daß sie sich von Copolymerisaten aus Maleinsäureanhydrid und 2,4,4-Trimethylpenten-1 mit mittleren Molgewichten von 8000 bis 500 000 ableiten und aus diesen durch Umsetzung in wasserfreiem organischem Medium bei Temperaturen von 0°C bis 200°C mit dem Amingemisch erhalten werden, wobei das Molverhältnis von Diamin A) zu Ammoniak bzw. Monoamin B) 1:0,3 bis 1:2,0 beträgt und mindestens 80% der Anhydridgruppen in die entsprechenden Imidgruppen überführt worden sind.

2. Verwendung von Papierleimungsmitteln gemäß Anspruch 1, dadurch gekennzeichnet, daß sie sich von äquimolar und alternierend aufgebauten Copolymerisaten aus Maleinsäureanhydrid und 2,4,4-Trimethylpenten-1- mit mittleren Molgewichten von 10 000 bis 60 000 ableiten, deren Grenzviskositäten 0,08 bis 0,3 dl/g betragen (gemessen in Dimethylformamid bei 25°C).

3. Verwendung von Papierleimungsmitteln gemäß Anspruch 1, dadurch gekennzeichnet, daß sie Polyimidamine durch Umsetzung mit einem Amingemisch aus
A) einem Diamin der Formel

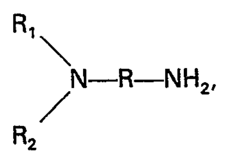

wobei R eine lineare Akylenkette aus 2 bis 6 Methylengruppen und $R_1$ und $R_2$ lineare $C_1$—$C_4$-Alkylreste darstellen und
B) einem primären Monoamin aus der Gruppe Methylamin, Äthylamin, n-Propylamin, n-Butylamin, n-Hexylamin, Cyclohexyamin, 2-Äthylhexylamin und Dehydroabietylamin erhalten worden sind.

4. Verwendung von Papierleimungsmitteln gemäß Anspruch 3, dadurch gekennzeichnet, daß ein Amingemisch aus 1-Amino-3-dimethylaminopropan und Äthylamin im Molverhältnis 1:1 bis 1:1,6 eingesetzt worden ist.

5. Verwendung von Papierleimungsmitteln gemäß Anspruch 1, dadurch gekennzeichnet, daß Salze der Polyimidamine mit Ameisensäure, Essigsäure, Propionsäure, Milchsäure, Salzsäure, Salpetersäure oder Schwefelsäure eingesetzt werden.

**Revendications**

1. Utilisation de sels d'acides organiques ou inorganiques avec des polyimidamines formées à partir de copolymères d'anhydride d'acide maléique avec des monomères hydrocarbonés et un mélange comprenant:
A) une diamine comportant un groupe amino tertiaire et un groupe amino primaire, et
B) de l'ammoniac ou une monoamine primaire,
comme agents d'encollage superficiel pour le papier, caractérisée en ce que ces sels dérivent de copolymères d'anhydride d'acide maléique et de 2,4,4-triméthylpentène-1 ayant des poids moléculaires moyens de 8.000 à 500.000, tandis qu'ils sont obtenus à partir de ces copolymères par réaction en milieu organique anhydre à des températures de 0 à 200°C avec le mélange d'amines, le rapport molaire entre la diamine (A) et l'ammoniac ou la monoamine (B) étant de 1:0,3 à 1:2, tandis qu'au moins 80% des groupes anhydrides sont transformés en groupes imides correspondants.

2. Utilisation d'agents d'encollage du papier suivant la revendication 1, caractérisée en ce que ces agents dérivent de copolymères d'anhydride d'acide maléique et de 2,4,4-triméthylpentène-1 à structure équimolaire et alternée avec des poids moléculaires moyens de 10.000 à 60.000, les viscosités limites de ces copolymères étant de 0,08 à 0,3 dl/g (mesuré dans du diméthylformamide à 25°C).

3. Utilization d'agents d'encollage du papier suivant la revendication 1, caractérisée en ce que les polyimidamines sont obtenues par réaction avec un mélange d'amines comprenant:
A) une diamine de formule:

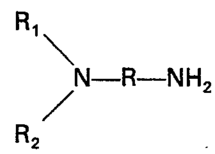

dans laquelle
R représente une chaîne alkylène linéaire de 2 à 6 groupes méthylène, et $R_1$ et $R_2$ représentent des groupes alkyle linéaires contenant 1 à 4 atomes de carbone, et
B) une monoamine primaire choisie parmi le groupe comprenant la méthylamine, l'éthylamine, la n-propylamine, la n-butylamine, la n-hexylamine, la cyclohexylamine, la 2-éthylhexylamine et la déhydroabiétylamine.

4. Utilisation d'agents d'encollage du papier suivant la revendication 3, caractérisée en ce qu'on utilise un mélange d'amines comprenant le 1-amino-3-diméthylaminopropane et l'éthylamine dans un rapport molaire de 1:1 à 1:1,6.

5. Utilisation d'agents d'encollage du papier suivant la revendication 1, caractérisée en ce qu'on emploie des sels des polyimidamines avec l'acide formique, l'acide acétique, l'acide propionique, l'acide lactique, l'acide chlorhydrique, l'acide nitrique ou l'acide sulfurique.

**Claims**

1. The use of salts of organic or inorganic acids with polyimide amines obtained from copolymers of maleic anhydride with hydrocarbon monomers and a mixture of
A) a dimine having a tertiary and a primary amino group, and
B) ammonia or a primary monoamine
as surface sizing agents for paper, characterised in that they are derived from copolymers of maleic anhydride and 2,4,4-trimethyl-1-pentene having average molecular weights of 8,000 to 500,000 and are prepared from these copolymers by reaction with the amine mixture in an anhydrous organic medium at temperatures of 0°C to 200°C, the molar ratio of diamine A) to ammonia or monoamine B) being 1:0.3 to 1:2.0 and at least 80% of the anhydride groups having been converted into the corresponding imide groups.

2. The use of paper sizing agents according to claim 1, characterised in that they are derived from copolymers of maleic anhydride and 2,4,4-trimethyl-1-pentene, which copolymers have an equimolar and alternating structure, average molecular weights of 10,000 to 60,000 and intrinsic viscosities of 0.08 to 0.3 dl/g (measured in dimethyl formamide at 25°C).

3. The use of paper sizing agents according to claim 1, characterised in that the polyimide amines have been obtained by reaction with an amine mixture of
A) a diamine of the formula

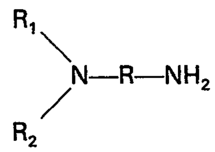

in which
R represents a linear alkylene chain consisting of 2 to 6 methylene groups and $R_1$ and $R_2$ represent linear $C_1$—$C_4$ alkyl radicals and
B) a primary monoamine from the group methylamine, ethylamine, n-propylamine, n-butylamine, n-hexylamine, cyclohexylamine, 2-ethylhexylamine and dehydroabietylamine.

4. The use of paper sizing agents according to claim 3, characterised in that an amine mixture of 1-amino-3-dimethylaminopropane and ethylamine has been used in a molar ratio of 1:1 to 1:1.6.

5. The use of paper sizing agents according to claim 1, characterised in that salts of the polyimide amines with formic acid, acetic acid, propionic acid, lactic acid, hydrochloric acid, nitric acid or sulphuric acid are used.